# EUROPÄISCHE PATENTANMELDUNG

(11) **EP 1 178 706 A2**
(43) Veröffentlichungstag der Anmeldung: **06.02.2002**
(21) Anmeldenummer: 01118383.7
(22) Anmeldetag: 27.07.2001
(51) Int. Cl.: H05B 33/08

(54) **Leuchtenanordnung**

(30) Priorität: 02.08.2000 DE 10037694
(71) Anmelder: FER Fahrzeugelektrik GmbH, 99819 Eisenach (DE)
(72) Erfinder: Werner, Hermann, 99817 Eisenach (DE); Quendt, Peer, Dr., 99817 Eisenach (DE)
(74) Vertreter: Strasser, Wolfgang

(57) **Zusammenfassung**

Zur Verbesserung der bei längerer Brenndauer erzielbaren Lichtausbeute sind bei einer Leuchtenanordnung, die mehrere, gleichzeitig ein- und ausschaltbare, jeweils mit einer Leuchtdiode (14) als Lichtquelle bestückte Leuchten (12) umfaßt, die Leuchtdioden aller Leuchten miteinander in Reihe geschaltet, wobei für alle in Reihe geschalteten Leuchtdioden nur eine einzige gemeinsame Schutzschaltung (16, 17) vorgesehen ist.

## Beschreibung

Die Erfindung betrift eine Leuchtenanordnung der im Oberbegriff von Anspruch 1 genannten Art.

In Kraftfahrzeugleuchten werden in zunehmendem Maß Leuchtdioden als Lichtquellen verwendet, da sie im Vergleich zu Glühlampen eine längere Lebensdauer sowie einen geringeren Energieverbrauch besitzen und neue Gestaltungsmöglichkeiten eröffnen.

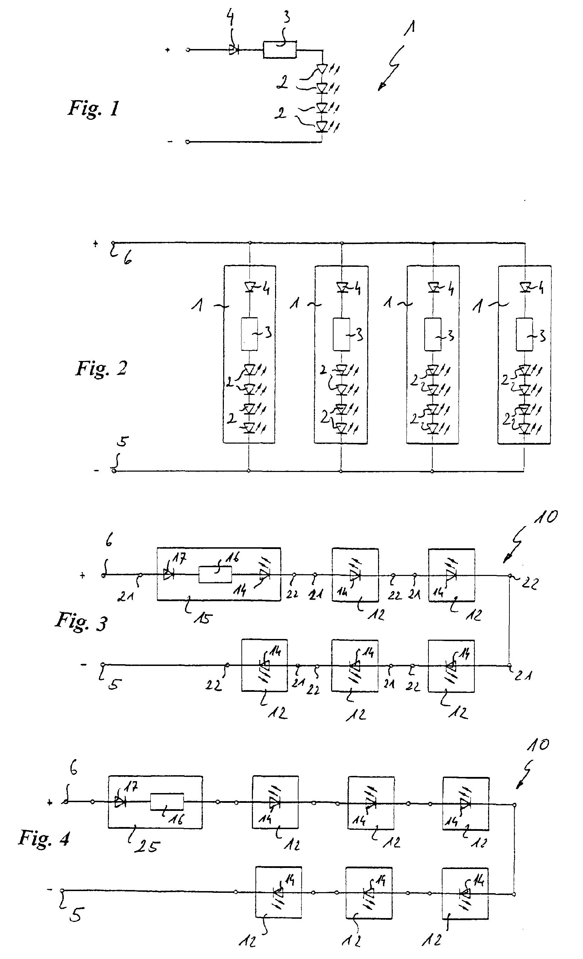

Im Gegensatz zu herkömmlichen Glühlampen ist es aber nicht möglich, die Leuchtdioden direkt am Bordnetz zu betreiben, das eine Betriebsspannung von 12 V oder 24 V aufweist. Zur Anpassung an die Bordspannung des Fahrzeugs und zum Schutz gegen Überspannungsimpulse ist es vielmehr erforderlich, zusätzliche Bauelemente zu verwenden, wie dies in der den Stand der Technik darstellenden Fig. 1 der beigefügten Zeichnung wiedergegeben ist.

Die dort gezeigte Fahrzeugleuchte 1 umfaßt als Lichtquelle mehrere Leuchtdioden 2, die miteinander sowie mit einem Vorwiderstand 3 und einer Schutzdiode 4 in Reihe geschaltet sind.

In Fig. 2 ist eine aus mehreren derartigen Fahrzeugleuchten 1 bestehende Leuchtenanordnung dargestellt, bei der die einzelnen Leuchten 1 zwischen einem Masseanschluß 5 und einem schaltbaren Stromversorgungsanschluß 6 so zueinander parallel geschaltet sind, daß sie gleichzeitig ein- und ausgeschaltet werden können.

In beiden Schaltungsanordnungen weist jede der Leuchten 1 eine Vielzahl von Leuchtdioden 2 auf, um trotz der relativ geringen Lichtausbeute der bisher zur Verfügung stehenden Leuchtdioden die für die betreffende Leuchte erforderliche Lichtstärke zu erzielen.

Nun steht seit kurzem eine neue Generation von Leuchtdioden zur Verfügung, die eine wesentlich höhere Lichtausbeute besitzen, sodaß es im Prinzip möglich ist, in jeder Leuchte nur eine einzige derartige Leuchtdiode einzusetzen. Allerdings zeigt sich dann, wenn man ansonsten den herkömmlichen, in den Fig. 1 und 2 wiedergegebenen Aufbau der Leuchten 1 beibehält, daß die Lichtstärkewerte dieser neuen Leuchtdioden im Dauerbetrieb auf bis zu 30% des Einschaltwertes zurückgehen. Dadurch wird die prinzipiell wesentlich höhere Lichtausbeute dieser Lichtquellen wieder weitgehend zunichte gemacht.

Demgegenüber liegt der Erfindung die Aufgabe zugrunde, eine Leuchtenanordnung der oben genannten Art so weiterzubilden, daß moderne Leuchtdioden mit hoher Lichtausbeute verwendet werden können, ohne daß ihre Lichtstärke im Dauerbetrieb in merklichem Umfang abfällt.

Zur Lösung dieser Aufgabe sieht die Erfindung die im Anspruch 1 zusammengefaßten Merkmale vor.

Diesen erfindungsgemäßen Maßnahmen liegt die Erkenntnis zugrunde, daß bei Verwendung des in Fig. 1 gezeigten Schaltungsprinzips in Verbindung mit den modernen Leuchtdioden insbesondere der Vorwiderstand je nach Bordspannung 85% bis 92% der elektrischen Leistung aufnimmt und dabei entsprechend viel Wärme entwickelt. Da es bei den heute üblichen und geforderten kleinen Bauformen schwierig ist, diese Wärme schnell abzuleiten, hat sie bei längerer Betriebsdauer eine beträchtliche Erhöhung der Chiptemperatur der Leuchtdiode zur Folge, woraus die oben erwähnte Abnahme des Lichtstärkewertes resultiert.

Um diese Wirkungskette zu durchbrechen, sieht die Erfindung vor, eine Vielzahl von Leuchten, die gleichzeitig ein- und ausgeschaltet werden, miteinander und mit einem einzigen, gemeinsamen Vorwiderstand und einer einzigen, gemeinsamen Schutzdiode in Reihe zu schalten. Da sich die Durchlaßspannungen der miteinander in Reihe liegenden Leuchtdioden addieren, vermindern sich der am Vorwiderstand auftretende Spannungsabfall und somit auch die an ihm erzeugte Verlustwärme.

Somit wird es in den Fällen, in welchen die Lichtausbeute einer der mehreren Leuchten nicht kritisch ist, möglich, den Vorwiderstand und die Schutzdiode in einer der Leuchten vorzusehen und mit deren Leuchtdiode zu einer Baueinheit zu kombinieren. Alle übrigen Leuchten weisen nur noch die Leuchtdiode auf, die mit hoher Effizienz genutzt werden kann, weil die Temperatur innerhalb der Leuchte so niedrig wie möglich gehalten wird.

Wenn gefordert ist, daß keine der Leuchtdioden durch die vom Vorwiderstand erzeugte Verlustwärme aufgeheizt wird, so ist gemäß einer besonders bevorzugten Ausführungsform der Erfindung vorgesehen, den Vorwiderstand und die Schutzdiode als gesonderte Baueinheit, das heißt von allen Leuchten getrennt an einer geeigneten Stelle, vorzugsweise zentral im Fahrzeug anzuordnen.

In beiden Fällen wird durch die Verwendung von verpolungssicheren Steckern verhindert, daß eine oder mehrere der Leuchtdioden mit falscher Polung angeschlossen werden.

Diese und weitere vorteilhafte Ausgestaltungen der Erfindung sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: ein Prinzipschalltbild einer dem Stand der Technik entsprechenden Kraftfahrzeugleuchte mit mehreren Leuchtdioden,
- Fig. 2: ein Prinzipschalltbild einer dem Stand der Technik entsprechenden Leuchtenanordnung mit mehreren Leuchten, von denen jede mehrere Leuchtdioden umfaßt,
- Fig. 3: ein Prinzipschalltbild einer ersten Variante der erfindungsgemäßen Leuchtenanordnung und
- Fig. 4: ein Prinzipschalltbild einer zweiten Variante der erfindungsgemäßen Leuchtenanordnung.

Die Fig. 1 und 2 wurden bereits oben erläutert.

In Fig. 3 ist eine erste Ausführungsform der erfindungsgemäßen Leuchtenanordnung 10 dargestellt, bei der mehrere einzelne Leuchten 12, von denen jede nur eine Leuchtdiode 14 enthält, und eine Leuchte 15, die zusätzlich zu ihrer Leuchtdiode 14 einen Vorwiderstand 16 und eine Schutzdiode 17 aufweist, so zwischen einem Masseanschluß 5 und einem schaltbaren Stromversorgungsanschluß 6 miteinander in Reihe geschaltet sind, daß alle Leuchtdioden 14 miteinander sowie mit dem gemeinsamen Vorwiderstand 16 und der gemeinsamen Schutzdiode 17 eine Serienschaltung bilden. Dabei hat jede der Leuchten 12 sowie die Leuchte 5 einen eigenen elektrischen Ein- und Ausgang 21, 22. Diese Ein- und Ausgänge 21, 22 liegen an verpolungssicheren Steckern, die in Fig. 3 nur symbolisch dargestellt sind, in der Praxis aber verhindern, daß eine oder mehrere der Leuchten mit falscher Polung angeschlossen werden.

Die in Fig. 4 dargestellte Ausführungsform der erfindungsgemäßen Leuchtenanordnung 10 entspricht derjenigen aus Fig. 3 mit der Ausnahme, daß hier nur Leuchten 12 miteinander in Reihe geschaltet sind, die außer ihrer Leuchtdiode 14 keine weiteren Bauelemente enthalten. Der gemeinsame Vorwiderstand 16 und die gemeinsame Schutzdiode 17 sind in einer gesonderten Baueinheit 25 untergebracht, die zwar ebenfalls mit der Reihenschaltung der Leuchten 12 in Serie geschaltet von dieser aber räumlich völlig getrennt angeordnet ist. Diese Ausführungsform bietet den besonderen Vorteil, daß sämtliche Leuchten eine identische Bauform besitzen und die Baueinheit 25, in der eine gewisse Verlustwärme erzeugt wird, von den Leuchten 12 so weit entfernt angeordnet werden kann, daß sie deren Betriebstemperatur in keiner Weise beeinflußt.

## Patentansprüche

1. Leuchtenanordnung insbesondere an Kraftfahrzeugen, die mehrere, gleichzeitig ein- und ausschaltbare Leuchten (12) umfaßt, von denen jede als Lichtquelle wenigstens eine Leuchtdiode (14) aufweist, die durch eine Schutzschaltung (16, 17) gegen Überspannungen gesichert ist, **dadurch gekennzeichnet, daß** die Lichtquellen (14) der Leuchten (12) miteinander in Reihe geschaltet sind und daß für alle in Reihe geschalteten Lichtquellen (14) nur eine einzige gemeinsame Schutzschaltung (16, 17) vorgesehen ist.

2. Leuchtenanordnung nach Anspruch 1, **dadurch gekennzeichnet, daß** die Schutzschaltung (16, 17) mit einer der Leuchten zu einer Baueinheit (15) zusammengefaßt ist.

3. Leuchtenanordnung nach Anspruch 1, **dadurch gekennzeichnet, daß** die Schutzschaltung (16, 17) in einer von allen zugehörigen Leuchten (12) getrennten Baueinheit (25) zentral im Fahrzeug angeordnet ist.

4. Leuchtenanordnung nach einem der vorhergehenden Ansprüche, **dadurch gekennzeichnet, daß** die mehreren Leuchten (12) die gleiche Leuchtfunktion besitzen.

5. Leuchtenanordnung nach einem der vorhergehenden Ansprüche, **dadurch gekennzeichnet, daß** die mehreren, gleichzeitig ein- und ausschaltbaren Leuchten (12)in wenigstens zwei Gruppen unterteilt sind, deren Lichtquellen (14) jeweils miteinander in Reihe geschaltet sind und von denen jede eine eigene Schutzschaltung (16, 17) besitzt.

6. Leuchtenanordnung nach einem der vorhergehenden Ansprüche, **dadurch gekennzeichnet, daß** die Schutzschaltung (16, 17) einen mit den Lichtquellen (14) in Reihe liegenden Widerstand (16) umfaßt.

7. Leuchtenanordnung nach Anspruch 6, **dadurch gekennzeichnet, daß** der Widerstandswert des Widerstandes (16) auf die Anzahl der mit ihm in Reihe liegenden Lichtquellen (14) abgestimmt ist.

8. Leuchtenanordnung nach einem der vorhergehenden Ansprüche, **dadurch gekennzeichnet, daß** die Schutzschaltung (16, 17) eine mit den Lichtquellen (14) in Reihe liegende Diode (17) umfaßt.

9. Leuchtenanordnung nach einem der vorhergehenden Ansprüche, **dadurch gekennzeichnet, daß** die Verbindung der Leuchten (12) mit Hilfe eines verpolungssicheren Steckersystems erfolgt.
